# EUROPEAN PATENT SPECIFICATION

(11) **EP 2 643 603 B1**
(45) Date of publication and mention of the grant of the patent: **08.05.2019**
(21) Application number: 11810571.7
(22) Date of filing: 24.11.2011
(51) Int. Cl.: F16C 33/74, F16C 17/02, F16C 33/10

(54) **BEARING WITH INTEGRATED SEALS**
LAGER MIT INTEGRIERTEN DICHTUNGEN
ROULEMENT AVEC JOINTS INTÉGRÉS

(30) Priority: 24.11.2010 GB 201019934
(43) Date of publication of application: 02.10.2013
(73) Proprietor: Mahle International GmbH, 70376 Stuttgart (DE); Mahle Industries, Incorporated, Farmington Hills, MI 48335 (US)
(72) Inventor: LONOWSKI, Dan, Novi, MI 48377 (US); ISSLER, Wolfgang, 71409 Schwaikheim (DE)
(74) Representative: BRP Renaud & Partner mbB Rechtsanwälte Patentanwälte Steuerberater
(86) International application number: PCT/EP2011/005905
(87) International publication number: WO 2012/069192

(56) References cited:
- DE-A1-102004 024 983
- DE-A1-102004 028 773
- DE-A1-102010 031 200
- JP-A- 2001 182 751
- US-A1- 2010 163 219

## Description

The present invention relates to bearings, more particularly to bearings that enable an engine to operate with a lower volume flow rate of oil.

### BACKGROUND

Internal combustion engines are generally provided with an oil pump which has the capability of providing a much greater volume flow of oil than is needed under certain engine operating conditions. High oil pumping capacity is provided to supply the bearings of an engine with sufficient oil flow and pressure at engine idling speeds. However, when the engine is operating at normal vehicle operating speeds, only about 10 to 25% of the oil pump's potential capacity may be utilised. The need to run oil pumps having greater capacity than is required for most of the engine's operating life has several disadvantages including: much energy being wasted by the pump being physically too large and consuming too much engine power to drive it; the oil pump is unnecessarily heavy; at higher engine speeds the pump provides too much oil pressure and the majority of the oil flow is diverted straight back into the engine sump via the oil pressure relief overflow valve without ever passing through the bearings.

The reasons for engines having such large oil pumps is to a significant extent due to the design of bearings employed in the engines. As the oil is pumped into the clearance between the bearing surface and the rotating crankshaft journal running within the bearing it escapes through the axial edges of the clearance, reducing oil pressure within the clearance, requiring a substantial flow rate of oil to be pumped into the clearance to maintain the oil pressure within the clearance.

JP2001182751 describes a bearing provided with circumferential seals adjacent the axial ends of the bearing surface that reduce oil flow out from the clearance between a crankshaft journal and the bearing. The circumferential seals are formed of solid lubricant material, such as carbon graphite and molybdenum disulfide. Disadvantageously, such materials are relatively inflexible and do not provide reliable sealing in the case of misalignment between the crankshaft journal and the bearing.

US20020061146 describes a bearing in which a uniform coating of lead, tin or resin is provided on a profiled bearing alloy. Disadvantageously, such a design requires complex and expensive machining of the bearing alloy.

US20100054639 describes a bearing in which a galvanic or sputtered coating is provided across the entire bearing surface, and has circumferential seals formed either by profiling the coating or by profiling the underlying layer onto which the coating is deposited. Disadvantageously, such a metallic tri-layer structure is complex to manufacture. Further, it does not provide reliable sealing in the case of misalignment between the crankshaft journal and the bearing.

DE102004028773 describes a bearing that is profiled to accept a pair of circumferential polymer sealing strips that contact the crankshaft journal. Disadvantageously, such a design, which comprises separate components, increases the component inventory, assembly complexity and cost, and reduces reliability.

DE102007058744 describes a bearing that is profiled with a pair of circumferential ridge and gulley shapes formed by machining of the bearing surface, e.g. by a high power laser beam. Disadvantageously, such manufacturing techniques are complex and expensive. Further, the resultant device is relatively inflexible and does not provide reliable sealing in the case of misalignment between the crankshaft journal and the bearing.

### BRIEF SUMMARY OF THE DISCLOSURE

According to a first aspect of the invention, there is provided a half bearing comprising a bearing member having at least an external backing layer and an internal bearing lining layer with an optional bearing overlay layer defining a concave substantially semi-cylindrical bearing surface extending between first and second axial ends of the half bearing, wherein the bearing lining layer is provided with at least first and second polymer seals at or adjacent to the first and second axial ends, the first and second polymer seals projecting from and formed directly on the bearing lining layer and extending at least partially circumferentially across the bearing lining layer.

According to a second aspect of the invention, there is provided a 360° engine bearing assembly comprising a first half bearing comprising a bearing member having at least an external backing layer and an internal bearing lining layer with an optional bearing overlay layer defining a concave substantially semi-cylindrical bearing surface extending between first and second axial ends of the half bearing, wherein the bearing lining layer is provided with at least first and second polymer seals at or adjacent to the first and second axial ends, the first and second polymer seals projecting from and formed directly on the bearing lining layer and extending at least partially circumferentially across the bearing lining layer, and a second half bearing.

According to a third aspect of the invention, there is provided an internal combustion engine having a half bearing comprising a bearing member having at least an external backing layer and an internal bearing lining layer with an optional bearing overlay layer defining a concave substantially semi-cylindrical bearing surface extending between first and second axial ends of the half bearing, wherein the bearing lining layer is provided with at least first and second polymer seals at or adjacent to the first and second axial ends, the first and second polymer seals projecting from and formed directly on the bearing lining layer and extending at least partially circumferentially across the bearing lining layer.

According to a fourth aspect of the invention, there is provided a method of manufacturing a half bearing comprising a bearing member having at least an external backing layer and an internal bearing lining layer with an optional bearing overlay layer defining a concave substantially semi-cylindrical bearing surface extending between first and second axial ends of the half bearing, comprising forming projecting first and second polymer seals directly onto the bearing lining layer at or adjacent to the first and second axial ends, such that the first and second polymer seals project from the bearing lining layer and extend at least partially circumferentially across the bearing lining layer.

The polymer seals are formed directly on the concave bearing surface of the bearing lining layer. The seals may be provided on regions of the bearing layer that are not raised relative to a main surface of the bearing lining layer; in other words, the polymer seals are not formed on raised lands, but do themselves give rise to raised lands adjacent to the axial ends of the bearing. Alternatively, the bearing member may comprise circumferential raised regions of the bearing lining layer, with the seals provided on the raised regions.

The bearing member may have joint faces and the polymer seals may extend around substantially the circumference of the bearing lining layer between the joint faces. The bearing member may have joint faces and the polymer seals may extend around a portion of the circumference of the bearing lining layer spaced from the joint faces. The bearing member may have joint faces and the polymer seals may extend around a portion of the circumference of the bearing lining layer terminating adjacent to the joint faces.

The first and second polymer seals each comprise a plurality of sub-seals and/or the bearing surface is provided with at least a further seal intermediate the first and second polymer seals.

An oil supply hole may be provided in the bearing surface, being located intermediate the first and second polymer seals. An oil distribution groove may be provided in the bearing surface, being located intermediate the seals.

The polymer seals may be formed directly on the bearing lining layer by spraying. The polymer seals may be formed directly on the bearing lining layer by screen printing. The polymer seals may be formed directly on the bearing lining layer by a brushing process. The polymer seals may be formed directly on the bearing lining layer by an extrusion process.

The polymer seals may project from the bearing lining layer by a height of 1pm to 50pm, preferably 2pm to 30pm, more preferably 3pm to 10pm, and yet more preferably 5pm to 8pm. The sides of the polymer seals may be angled at an angle A of 30°. The polymer seals may each have a top width W of 100 to 2000pm, preferably 200 to 600pm.

It will be appreciated that the present application is concerned with a half bearing having polymer seals that have been directly formed onto the bearing lining layer, as opposed to ready-made seals having been post-fitted, for example by separate seals having been connected onto the bearing surface or by seals having been adhered onto the surface. The process of forming the polymer seals onto the bearing lining layer is advantageously automated, for example with a spray gun being operated by a robotic arm.

The polymer may comprise at least one of polyamide (PA), polyimide (P1), polyamide-imide (PAI), polyethylene terephthalate (PETP), polybutylene terephthalate (PBTP) or other high strength polymers which may optionally contain solid lubricant components, such as graphite, MoS2 and/or other filler materials Such filler materials may be metallic particles, inorganic hard particles or other particles known to reduce wear.

The first half bearing may be retained in an engine block main bearing housing, and the second half bearing is retained in a main bearing cap housing.

The second half bearing may be a plain half bearing. The second half bearing may be a half bearing according to an embodiment of the present invention.

The method comprises forming the polymer seals on the concave bearing surface of the bearing lining layer. Alternatively, the method may comprise forming circumferential raised regions of the bearing lining layer, and forming the polymer seals on the raised regions.

The method comprises spraying, screen printing, brushing or extruding the polymer seals directly onto the bearing lining layer. The polymer may be extruded onto the bearing lining layer, for example as a liquid or a gel.

### BRIEF DESCRIPTION OF THE DRAWINGS

Embodiments of the invention are further described hereinafter with reference to the accompanying drawings, in which:
- Figure 1 shows a perspective view of a half bearing according to the present invention;
- Figure 2 shows a cut-away view of the half bearing of Figure 1;
- Figure 3 shows the half bearing of Figures 1 and 2 assembled in the engine block housing of a main bearing together with a plain half bearing installed in the main bearing cap housing and a crankshaft main bearing journal;
- Figure 4 shows a transverse cross-sectional view through the Figure 3 assembly; and
• Figure 5 shows a cross-sectional view through a half bearing according to the present invention
• Figure 6 shows a cross-sectional view through a half bearing according to the present invention.

### DETAILED DESCRIPTION

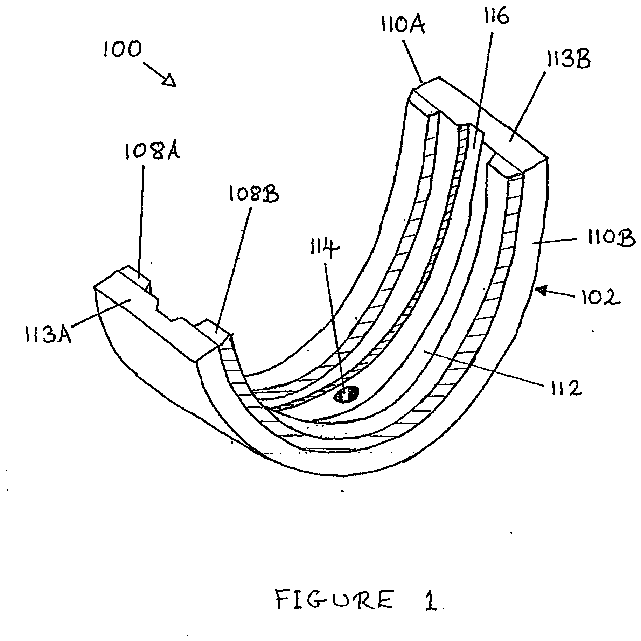

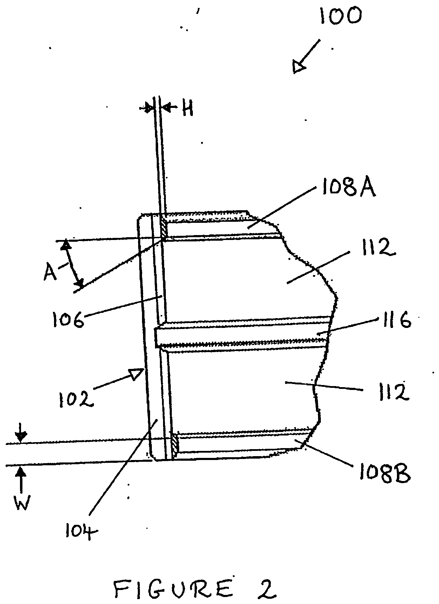

Referring now to Figures 1 and 2 of the drawings, where the same features are denoted by common reference numerals.

A first embodiment of a half bearing according to the present invention is shown at 100. Figure 2 shows a cut-away view through the half bearing of Figure 1. The half bearing 100 is substantially in the shape of half of a right cylindrical length of tube that has been cut in half, coplanar with its axis. The half bearing 100 comprises a bearing member 102 having a strong external backing layer of steel 104 (but which could be bronze material for example) and an internal bearing lining layer 106 of a suitable bearing alloy, which may, for example, be aluminium-based or copper-based in known manner. The bearing lining layer 106 may be provided with an overlay coating (not shown) if appropriate in known manner. First and second polymer seals 108A and 108B are provided on the bearing lining layer 106 adjacent the first and second axial ends 110A and 110B of the half bearing 100. The bearing member 102 has a bearing surface 112 between the first and second polymer seals 108A and 108B. The bearing member 102 is provided with an oil supply hole 114 connecting to a circumferential oil distribution groove 116 within the bearing surface 112. The bearing member 102 has joint faces 113A and 113B, which locate with corresponding joint faces of a further half bearing to form a 360° bearing assembly.

The first and second polymer seals 108A and 108B are selectively sprayed onto the bearing surface 112 of the bearing lining layer 106, such that the polymer is only sprayed into the required locations to form the seals. Alternatively, the polymer may be sprayed using a masking process, for example a lithographic mask may be provided on the bearing surface prior to deposition of the polymer with unwanted polymer being lifted-off in a subsequent step. In a further alternative, the polymer may be applied to the bearing surface by a screen printing process, in which the polymer is printed through a mask. In a further alternative, the polymer may be selectively applied by a brushing process, in which a brush is provided with polymer in a controlled quantity and paints' the polymer onto the bearing surface. In a yet further alternative, the polymer may be extruded onto the bearing surface, for example as a liquid or a gel, with the extrusion being at a controlled rate. Advantageously, the process of forming the polymer seals will be automated, for example being conducted by a robot having a robotic arm.

The polymer seals 108A and 108B have a height H of 5µm. The sides of the polymer seals are angled at an angle A of 30°. The polymer seals have a top width W of 400µm. In Figure 1, the polymer seals 108A and 108B are shown present along the entire circumference of the semi-cylindrical bearing surface 112, between the joint faces 113A and 113B. However, alternatively, the polymer seals may be provided only along part of the bearing surface. For example, the polymer seals may be centrally located along the circumference of the bearing surface between the joint faces. Alternatively, lengths of the polymer seals may be provided, along the circumferences of the bearing surface at or adjacent the axial ends, ending at the joint faces, with an intervening region of the bearing surface within which polymer seals are not provided. Such alternative arrangements may be advantageous in the case that the half bearing has a feature known as joint face crush relief, in which a larger clearance is provided between the bearing running surface and the co-operating shaft journal surface at the region where the circumferential ends of two 180° half bearings meet to form a full 360° bearing assembly about a shaft journal. When assembled in a housing, a joint face crush relief region of a 180° half bearing may provide a region of increased clearance, typically of about 5° to 100°. Accordingly, a 360° bearing assembly in which a crush relief is provided at each circumferential end may comprise 20° to 40° of increased clearance. Crush relief regions typically provide a direct path for oil pumped through the bearings to be expelled back into the sump, and by the provision of polymer seals on one or both bearing halves of a 360° bearing assembly the flow of oil through the crush relief regions may be reduced.

In Figure 1, two polymer seals 108A and 108B are shown, each of which is a single strip of polymer adjacent an axial end 110A and 110B of the half bearing 100. However, further polymer seals may be provided to further control oil flow in operation. Several sub-seals are provided at each axial end of the bearing surface 112, providing a composite effect, for example two, three or four sub-seals may be provided at each axial end. Alternatively or additionally, other polymer seals may be provided in other regions of the bearing surface, spaced from the axial ends
110A and 110B, for example a third and a fourth polymer seal may be provided between the first and second polymer seals, for example with the four polymer seals being evenly separated across the bearing surface between the axial ends.

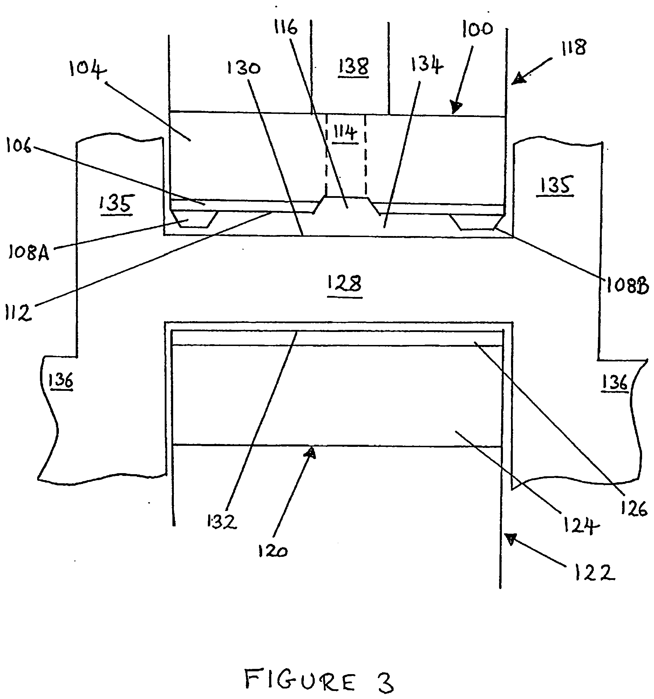

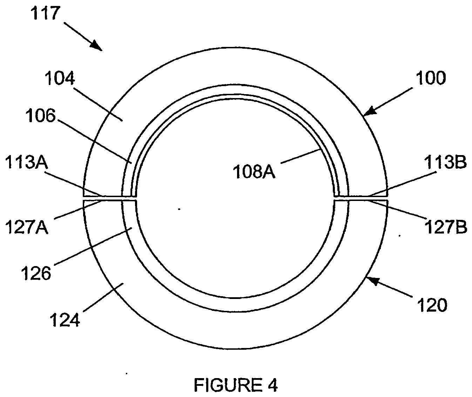

Referring now to Figures 3 and 4, and where half bearing 100 and a plain second half bearing 120 are assembled into a composite 360° bearing assembly 117, in which the half bearing 100 is shown installed in the engine block main bearing housing 118 of an internal combustion engine, and a plain second half bearing 120 is shown installed in the main bearing cap 122 half of the housing. Figure 3 shows a cross-sectional view coplanar with the axis of rotation of the crankshaft journal rotating within the bearing halves, and Figure 4 shows a corresponding cross-sectional view perpendicular to the axis of rotation. The plain second half bearing 120 has a strong external backing layer of steel 124 (but which could be bronze material for example) and an internal bearing lining layer 126 of a suitable bearing alloy, which may, for example, be aluminium-based or copper-based in known manner. The plain second half bearing 120 has joint faces 127A and 127B that locate with joint faces 113A and 113B of the bearing member 102 to form the 360° bearing assembly 117. The plain second half bearing 120 is a conventional bearing and has a joint face relief region (not shown) in the known manner. The two bearing halves 100 and 120 are assembled about a crankshaft journal 128 having a running surface 130 that co-operates with the bearing surfaces 112 and 132 of the two half bearings 100 and 120, and which journal rotates about its axis. There is a clearance 134 provided between the running surface 130 and the bearing surfaces 112 and 132. The crankshaft has web portions 135 on the ends of the journal 128 in known manner and the web portions have big end journals 136 supported thereon. The big end journals 136 support connecting rods and pistons (both not shown) in known manner. The main bearing housing 118 in the engine block is provided with an oil gallery 138 to supply oil under pressure from an associated oil pump (not shown) to the oil supply hole 114 and the oil distribution groove 116.

Alternatively, the 360° bearing assembly may comprise two half bearings having polymer seals according to the invention. Advantageously, such an arrangement may provide further confinement of oil within the clearance between the bearing halves of the bearing assembly and the crankshaft journal.

In operation, the polymer seals 108A and 108B co-operate with the running surface 130 of the rotating crankshaft journal 128. Oil is supplied under pressure from the engine oil pump to the oil gallery 138 and thence to the oil supply hole 114. The oil distribution groove 116 receives oil from the oil hole 114, which spreads into the clearance 134 under pressure. Accordingly there is always an oil film in the clearance 134 between the running surface 130 of the crankshaft journal 128 and the bearing surfaces 112 and 132. The distribution of the oil within the oil distribution groove 116 is assisted by the viscous drag of the rotating crankshaft journal 128, the oil spreading axially throughout the clearance 134 therefrom. The polymer seals 108A and 108B reduce the egress of oil out from within the clearance 134, reducing flow and maintaining a higher oil pressure within the clearance.

The assembly illustrated in Figures 3 and 4 has one half bearing according to embodiments of the present invention that is coupled with a plain half bearing. Alternatively the engine assembly may use two half bearings according to embodiments of the present invention.

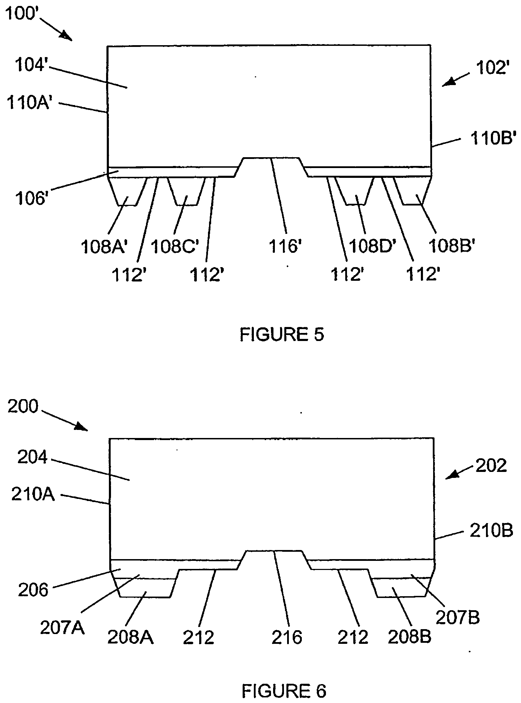

Referring now to Figure 5, where a half bearing 100' according to the present invention is shown, in cross-sectional view.

The half bearing 100' of Figure 5 is similar to that of the half bearing 100 of Figures 1 to 3. Similar numbers have been used to indicate similar elements. Accordingly, the polymer seal 108A' of Figure 5 corresponds with the polymer seal 108A of Figure 3.

In contrast to the half bearing 100 of Figure 3, the half bearing 100' of Figure 5 differs by provision of the third and fourth polymer seals 108C' and 108D' on the bearing surface 112' between the first and second polymer seals 108A' and 108B'. One of the additional polymer seals 108C' and 108D' is provided on each side of the oil distribution groove 116'.

Referring now to Figure 6, where a second embodiment of a half bearing 200 according to the present invention is shown, in cross-sectional view.

In this second embodiment, the half bearing 200 is similar to that of the half bearing 100. The bearing comprises a bearing member 202 having a strong external backing layer of steel 204 (but which could be bronze material for example) and an internal bearing lining layer 206 of a suitable bearing alloy, which may, for example, be aluminium-based or copper-based in known manner. The bearing lining layer 206 may be provided with an overlay coating (not shown) if appropriate in known manner.

In contrast to the half bearing 100 of Figure 3, the half bearing 200 of Figure 6 differs in that the bearing lining layer 206 is provided with raised regions 207A and 207B, on which the first and second polymer seals 208A and 208B are provided, the respective raised regions and polymer seals being adjacent the first and second axial ends 210A and 210B of the half bearing 200.

The bearing member 202 has a bearing surface 212 between the first and second polymer seals 208A and 208B. The bearing member 202 is provided with an oil supply hole (not shown) connecting to a circumferential oil distribution groove 216 within the bearing surface 212.

The raised regions 207A and 207B of the bearing lining layer 206 are formed by machining the bearing lining layer of the bearing member 202. The first and second polymer seals 208A and 208B are selectively sprayed onto the raised regions 207A and 207B of the bearing lining layer 206. Alternatively, the polymer may be sprayed using a masking process, applied by a screen printing process or selectively applied by a brush.

The operation of the half bearing 200 of the second embodiment is substantially the same as that of the half bearing 100 of the first embodiment. Accordingly, advantages of the first embodiment are also provided by the second embodiment.

Advantageously, the half bearing of the present invention is simple to manufacture. Advantageously, through the polymer seals providing reduced oil flow axially out from within the clearance between the crankshaft journal and the bearing surface, a higher proportion of the volume of oil flowing into the main bearings is conserved, whilst still retaining adequate lubrication and pressure, and accordingly, it is possible to utilise a smaller capacity oil pump, which may also be both physically smaller and lighter. Advantageously, by selectively providing the polymer onto the bearing surface only adjacent the axial ends, with lubricant within the clearance the main, central part of the crankshaft journal runs upon the bearing surface which is optimised for the purpose with respect to its material composition and its design, whilst also having the oil retaining advantage of the polymer seals. Further advantageously, the design of the present embodiments permit the half bearing to be manufactured from a bi-layer metal system, being only the metal layers of the external backing layer and the bearing lining layer, which enables less complex manufacturing than would be the case for a tri-layer metal system. Yet further, advantageously, the polymer seals are relatively flexible, and in use provide reliable sealing in the case of misalignment between the crankshaft journal and the bearing. Further, the formation of the seals on the bearing member provides a single component half bearing, with the corresponding advantages of reduced inventory for suppliers and simplicity of assembly for customers, as well as reduced cost and improved reliability, with respect to the use of a bearing member with separate seals. Advantageously the half bearing of embodiments of the present invention may provide wider tolerances for the bearing member and/or the running crankshaft journal, reducing manufacturing complexity and cost, reducing risk of seizure, and providing a greater sealing effect over the operational lifetime of an engine. Advantageously, the manufacturing process may be simplified by the formation of a polymer seal onto the bearing surface that projects further from the bearing surface than is required for long-term operation, such that the polymer seals may be worn to size, in accordance with the particular dimensions of the crankshaft journal running within the associated bearing assembly, and any potential misalignment, thereby reducing manufacturing cost and improving the quality of the seal formed between the bearing half and the journal.

Throughout the description and claims of this specification, the words "comprise" and "contain" and variations of them mean "including but not limited to", and they are not intended to (and do not) exclude other moieties, additives, components, integers or steps.

## Claims

1. A half bearing (100, 100', 200) comprising a bearing member (102, 102', 202) having at least an external backing layer (104, 104', 204) and an internal bearing lining layer (106, 106', 206) with an optional bearing overlay layer defining a concave substantially semi-cylindrical bearing surface (112, 112', 212) extending between first and second axial ends (110A, 110B; 110A', 1108'; 210A, 210B) of the half bearing (100, 100', 200), wherein the bearing lining layer (106, 106', 206) is provided with at least first and second seals (108A, 108B; 108A', 108B', 108C', 108D'; 208A, 208B) at or adjacent to the first and second axial ends (110A, 110B; 110A', 110B'; 210A, 210B), wherein the first and second seals (108A, 108B; 108A', 108B', 108C', 108D'; 208A, 208B) project from and are formed directly on the bearing lining layer (106, 106', 206) and extend at least partially circumferentially across the bearing lining layer (106, 106', 206),
**characterized in that** the first and second seals are made of a polymer and each comprises a plurality of sub-seals, and/or
the bearing surface (112') is provided with at least a further seal (108C', 108D') intermediate the first and second seals (108A', 108B') which are made of a polymer.

2. A half bearing according to claim 1, **characterized in that** the polymer seals (108A, 108B; 108A', 108B', 108C', 108D'; 208A, 208B) are formed on the concave bearing surface (112, 112', 212) of the bearing lining layer. (106, 106', 206).

3. A half bearing according to claim 1, **characterized in that** the bearing member (202) comprises circumferential raised regions (207A, 207B) of the bearing layer (206), with the seals (208A, 208B) provided on the raised regions (207A, 207B).

4. A half bearing according to claim 1, 2 or 3, **characterized in that** the bearing member (102) has joint faces (113A, 113B) and the polymer seals (108A, 108B) extend around substantially the circumference of the bearing lining layer (106) between the joint faces (113A, 113B).

5. A half bearing according to claim 1, 2 or 3, **characterized in that** the bearing member has joint faces and the polymer seals extend around a portion of the circumference of the bearing lining layer spaced from the joint faces.

6. A half bearing according to claim 1, 2 or 3, **characterized in that** the bearing member has joint faces and the polymer seals extend around a portion of the circumference of the bearing lining layer terminating adjacent to the joint faces.

7. A half bearing according to any one preceding claim, **characterized in that** an oil supply hole (114) is provided in the bearing surface (112), being located intermediate the first and second polymer seals (108A, 108B), and wherein an oil distribution groove (116, 116', 216) is provided in the bearing surface (112, 112', 212), being located intermediate the seals (108A, 108B; 108A', 108B', 108C', 108D'; 208A, 208B).

8. A half bearing according to any one preceding claim, **characterized in that** the polymer seals (108A, 108B; 108A', 108B', 108C', 108D'; 208A, 208B) project from the bearing lining layer (106, 106', 206) by a height of 1 µm to 50µm.

9. A half bearing according to any one preceding claim, **characterized in that** polymer comprises at least one of polyamide (PA), polyimide (PI), polyamide-imide (PAI), polyethylene terephthalate (PETP), polybutylene terephthalate (PBTP) or other high strength polymers optionally containing solid lubricant components, such as graphite, MoS₂ and/or other filler materials.

10. A 360° engine bearing assembly (117) comprising a first half bearing (100, 100', 200) according to any one preceding claim and a second half bearing (120), **characterized in that** the first half bearing (100, 100', 200) is retained in an engine block main bearing housing, and the second half bearing is retained in a main bearing cap housing.

11. A 360° engine bearing assembly according to claim 10, **characterized in that** the second half bearing is a plain half bearing (120).

12. A 360° engine bearing assembly according to claim 10, **characterized in that** the second half bearing is a half bearing according to any one of claims 1 to 9.

13. A method of manufacturing a half bearing (100. 100', 200') comprising a bearing member (102, 102', 202) having at least an external backing layer (104, 104', 204) and an internal bearing lining layer (106, 106', 206) with an optional bearing overlay layer defining a concave substantially semi-cylindrical bearing surface (112, 112', 212) extending between first and second axial ends (110A, 110B; 110A', 110B'; 210A, 210B) of the half bearing (100, 100', 200), comprising forming projecting first and second seals (108A, 108B; 108A', 108B', 108C', 108D', 208A, 208B) at or adjacent to the first and second axial ends (110A, 110B; 110A', 110B'; 210A, 210B), such that the first and second seals (108A, 108B; 108A', 108B', 108C', 108D'; 208A, 208B) project from the bearing lining layer (106, 106', 206) and extend at least partially circumferentially across the bearing lining layer (106, 106', 206), **characterized in that** the first and second seals (108A, 108B; 108A', 108B', 108C' 108D'; 208A, 208B) are made of a polymer and are formed directly onto the bearing lining layer (106, 106', 206) by spraying, screen printing, brushing or extruding, wherein the first and second polymer seals each comprise a plurality of sub-seals, and/or
the bearing surface (112') is provided with at least a further seal (108C', 108D') intermediate the first and second polymer seals (108A', 108B').

## Patentansprüche

1. Halblager (100, 100', 200), umfassend ein Lagerelement (102, 102', 202), das mindestens eine externe Trägerschicht (104, 104', 204) und eine interne Lagerbelagsschicht (106, 106', 206) mit einer optionalen Lagerüberzugsschicht hat, die eine konkave im Wesentlichen halbzylindrische Lageroberfläche (112, 112', 212) definiert, die sich zwischen ersten und zweiten axialen Enden (110A, 110B; 110A', 110B'; 210A, 210B) des Halblagers (100, 100', 200) erstreckt, wobei die Lagerbelagsschicht (106, 106', 206) bereitgestellt ist mit ersten und zweiten Dichtungen (108A, 108B; 108A', 108B', 108C', 108D'; 208A, 208B) an oder benachbart zu den ersten und zweiten axialen Enden (110A, 110B; 110A', 110B'; 210A, 210B), wobei die ersten und zweiten Dichtungen (108A, 108B; 108A', 108B', 108C', 108D'; 208A, 208B) von der Lagerbelagsschicht (106, 106', 206) vorstehen und direkt auf dieser gebildet sind und sich mindestens teilweise umfänglich um die Lagerbelagsschicht (106, 106', 206) erstrecken,
**dadurch gekennzeichnet, dass**
die ersten und zweiten Dichtungen aus einem Polymer gemacht sind und wobei jede eine Vielzahl von Unterdichtungen umfasst und/oder die Lageroberfläche (112') mit mindestens einer weiteren Dichtung (108C', 108D') bereitgestellt ist, zwischenliegend zwischen den ersten und zweiten Dichtungen (108A', 108B'), die aus einem Polymer gemacht sind.

2. Halblager nach Anspruch 1, **dadurch gekennzeichnet, dass** die Polymerdichtungen (108A, 108B; 108A', 108B', 108C', 108D'; 208A, 208B) auf der konkaven Lageroberfläche (112, 112', 212) der Lagerbelagsschicht (106, 106', 206) gebildet sind.

3. Halblager nach Anspruch 1, **dadurch gekennzeichnet, dass** das Lagerelement (202) umfänglich erhöhte Bereiche (207A, 207B) der Lagerschicht (206) umfasst mit Dichtungen (208A, 208B) bereitgestellt auf den erhöhten Bereichen (207A, 207B).

4. Halblager nach Anspruch 1, 2 oder 3, **dadurch gekennzeichnet, dass** das Lagerelement (102) Verbindungsflächen (113A, 113B) hat und die Polymerdichtungen (108A, 108B) sich um im Wesentlichen den Umfang der Lagerbelagsschicht (106) zwischen den Verbindungsflächen (113A, 113B) erstrecken.

5. Halblager nach Anspruch 1, 2 oder 3, **dadurch gekennzeichnet, dass** das Lagerelement Verbindungsflächen hat und die Polymerdichtungen sich um einen Abschnitt des Umfangs der Lagerbelagsschichten erstrecken, die von den Verbindungsflächen räumlichen beabstandet sind.

6. Halblager nach Anspruch 1, 2 oder 3, **dadurch gekennzeichnet, dass** das Lagerelement Verbindungsflächen hat und die Polymerdichtungen sich um einen Abschnitt des Umfangs der Lagerbelagsschicht erstrecken, wobei sie benachbart der Verbindungsflächen enden.

7. Halblager nach einem vorstehenden Anspruch, **dadurch gekennzeichnet, dass** eine Ölzufuhröffnung (114) in der Lageroberfläche (112) bereitgestellt ist, die zwischen den ersten und zweiten Polymerdichtungen (108A, 108B) dazwischenliegen, und wobei eine Ölverteilungsnut (116, 116', 216) in der Lageroberfläche (112, 112', 212) bereitgestellt ist, die zwischen den Dichtungen (108A, 108B; 108A', 108B', 108C', 108D'; 208A, 208B) lokalisiert ist.

8. Halblager nach einem vorstehenden Anspruch, **dadurch gekennzeichnet, dass** die Polymerdichtungen (108A, 108B; 108A', 108B', 108C', 108D'; 208A, 208B) sich von der Lagerbelagsschicht (106, 106', 206) in einer Höhe von 1 µm bis 50 µm erstrecken.

9. Halblager nach einem vorstehenden Anspruch, **dadurch gekennzeichnet, dass** das Polymer mindestens eines aus Polyamid (PA), Polyimid (PI), Polyamidimid (PAI) Polyethylenterephthalat (PETP), Polybutylenterephthalat (PBTP) oder andere hochfeste Polymere umfasst, die optional feste Schmierstoffkomponenten enthalten, wie Graphit, MoS₂ und/oder andere Füllmaterialien.

10. 360°-Motorlageranordnung (117), umfassend ein erstes Halblager (100, 100', 200) nach einem vorstehenden Anspruch und ein zweites Halblager (120), **dadurch gekennzeichnet, dass** das erste Halblager (100, 100', 200) in einem Motorblockhauptlagergehäuse gehalten ist, und wobei das zweite Halblager in einem Hauptlagerdeckelgehäuse gehalten ist.

11. 360°-Motorlageranordnung nach Anspruch 10, **dadurch gekennzeichnet, dass** das zweite Halblager ein Gleithalblager (120) ist.

12. 360°-Motorlageranordnung nach Anspruch 10, **dadurch gekennzeichnet, dass** das zweite Halblager ein Halblager nach einem der Ansprüche 1 bis 9 ist.

13. Verfahren zum Herstellen eines Halblagers (100, 100', 200'), umfassend ein Lagerelement (102, 102', 202), das mindestens eine externe Trägerschicht (104, 104', 204) und eine interne Lagerbelagsschicht (106, 106', 206) mit einer optionalen Lagerüberzugsschicht hat, die eine konkave im Wesentlichen halbzylindrische Lageroberfläche (112, 112', 212) definiert, die sich zwischen ersten und zweiten axialen Enden (110A, 110B; 110A', 110B'; 210A, 210B) des Halblagers (100, 100', 200) erstreckt, umfassend Bilden vorstehender erster und zweiter Dichtungen (108A, 108B; 108A', 108B', 108C', 108D'; 208A, 208B) an oder benachbart zu den ersten und zweiten axialen Enden (110A, 110B; 110A', 110B'; 210A, 210B), sodass die ersten und zweiten Dichtungen (108A, 108B; 108A', 108B', 108C', 108D'; 208A, 208B) von der Lagerbelagsschicht (106, 106', 206) vorstehen und sich mindestens teilweise umfänglich um die Lagerbelagsschicht (106, 106', 206) erstrecken, **dadurch gekennzeichnet, dass** die ersten und zweiten Dichtungen (108A, 108B; 108A', 108B', 108C', 108D'; 208A, 208B) aus einem Polymer gemacht sind und direkt auf die Lagerbelagsschicht (106, 106', 206) gebildet sind mittels Sprühens, Siebdrucks, Pinselauftrags oder Extrudierens, wobei die ersten und zweiten Polymerdichtungen jede eine Vielzahl von Unterdichtungen umfassen und/oder
wobei die Lageroberfläche (112') mit mindestens einer weiteren Dichtung (108C', 108D') zwischen den ersten und zweiten Polymerdichtungen (108A', 108B') bereitgestellt ist.

## Revendications

1. Demi-palier (100, 100', 200) comprenant un élément d'appui (102, 102', 202) ayant au moins une couche de renfort externe (104, 104', 204) et une couche de garniture de palier interne (106, 106', 206) avec une couche de recouvrement de palier facultative définissant une surface d'appui concave sensiblement semi-cylindrique (112, 112', 212) s'étendant entre des première et seconde extrémités axiales (110A, 110B ; 110A', 110B' ; 210A, 210B) du demi-palier (100, 100', 200), dans lequel la couche de garniture de palier (106, 106', 206) est pourvue d'au moins de premier et second joints d'étanchéité (108A, 108B ; 108A', 108B', 108C', 108D' ; 208A, 208B) au niveau ou à proximité des première et seconde extrémités axiales (110A, 110B ; 110A', 110B' ; 210A, 210B), dans lequel les premier et second joints d'étanchéité (108A, 108B ; 108A', 108B', 108C', 108D' ; 208A, 208B) font saillie à partir de et sont formés directement sur la couche de garniture de palier (106, 106', 206) et s'étendent au moins partiellement circonférentiellement sur l'ensemble de la couche de garniture de palier (106, 106', 206),
**caractérisé en ce que**
les premier et second joints d'étanchéité sont constitués d'un polymère et chacun comprend une pluralité de sous-joints d'étanchéité,
et/ou
la surface d'appui (112') est pourvue d'au moins un autre joint d'étanchéité (108C', 108D') entre les premier et second joints d'étanchéité (108A', 108B') qui sont constitués d'un polymère.

2. Demi-palier selon la revendication 1, **caractérisé en ce que** les joints d'étanchéité polymères (108A, 108B ; 108A', 108B', 108C', 108D' ; 208A, 208B) sont formés sur la surface d'appui concave (112, 112', 212) de la couche de garniture de palier (106 106', 206).

3. Demi-palier selon la revendication 1, **caractérisé en ce que** l'élément d'appui (202) comprend des régions surélevées circonférentielles (207A, 207B) de la couche de garniture de palier (206), les joints d'étanchéité (208A, 208B) étant pourvus de régions surélevées (207A, 207B).

4. Demi-palier selon la revendication 1, 2 ou 3, **caractérisé en ce que** l'élément d'appui (102) a des faces d'articulation (113A, 113B) et les joints d'étanchéité polymères (108A, 108B) s'étendent autour sensiblement de la circonférence de la couche de garniture de palier (106) entre les faces d'articulation (113A, 113B).

5. Demi-palier selon la revendication 1, 2 ou 3, **caractérisé en ce que** l'élément d'appui a des faces d'articulation et les joints d'étanchéité polymères s'étendent autour d'une partie de la circonférence de la couche de garniture de palier espacée des faces d'articulation.

6. Demi-palier selon la revendication 1, 2 ou 3, **caractérisé en ce que** l'élément d'appui a des faces d'articulation et les joints d'étanchéité polymères s'étendent autour d'une partie de la circonférence de la couche de garniture de palier se terminant à proximité des faces d'articulation.

7. Demi-palier selon l'une quelconque des revendications précédentes, **caractérisé en ce qu'**un trou de fourniture d'huile (114) est prévu dans la surface d'appui (112), étant situé entre les premier et second joints polymères (108A, 108B), et dans lequel une rainure de distribution d'huile (116, 116', 216) est prévue dans la surface d'appui (112, 112', 212) étant située entre les joints d'étanchéité (108A, 108B ; 108A', 108B', 108C', 108D' ; 208A, 208B).

8. Demi-palier selon l'une quelconque des revendications précédentes, **caractérisé en ce que** les joints d'étanchéité polymères (108A, 108B ; 108A', 108B', 108C', 108D' ; 208A, 208B) font saillie à partir de la couche de garniture de palier (106, 106', 206) d'une hauteur de 1 µm à 50 µm.

9. Demi-palier selon l'une quelconque des revendications précédentes, **caractérisé en ce que** le polymère comprend au moins un de polyamide (PA), polyimide (PI), polyamide-imide (PAI), polytérephthalate d'éthylène (PETP), polytérephthalate de butylène (PBTP) ou d'autres polymères à haute résistance contenant de façon facultative des composants lubrifiants solides, comme le graphite, le MoS₂ et/ou d'autres matériaux de remplissage.

10. Ensemble palier de moteur à 360° (117) comprenant un premier demi-palier (100, 100',200) selon l'une quelconque des revendications précédentes et un second demi-palier (120), **caractérisé en ce que** le premier demi-palier (100, 100', 200) est retenu dans un boitier de roulement principal de bloc moteur, et le second demi-palier est retenu dans un boîtier de chapeau de roulement principal.

11. Ensemble palier de moteur à 360° selon la revendication 10, **caractérisé en ce que** le second demi-palier est un demi-palier lisse (120).

12. Ensemble palier de moteur à 360° selon la revendication 10, **caractérisé en ce que** le second demi-palier est un demi-palier selon l'une quelconque des revendications 1 à 9.

13. Procédé de fabrication d'un demi-palier (100, 100', 200') comprenant un élément d'appui (102, 102', 202) ayant au moins une couche de renfort externe (104, 104', 204) et une couche de garniture de palier interne (106, 106', 206) avec une couche de recouvrement facultative définissant une surface d'appui concave sensiblement semi-cylindrique (112, 112', 212) s'étendant entre des première et seconde extrémités axiales (110A, 110B ; 110A', 110B' ; 210A, 210B) du demi-palier (100, 100', 200),
comprenant la formation de premier et second joints d'étanchéité (108A, 108B ; 108A', 108B', 108C', 108D' ; 208A, 208B) faisant saillie au niveau ou à proximité des première et seconde extrémités axiales (110A, 110B ; 110A', 110B' ; 210A, 210B), de sorte que les premier et second joints d'étanchéité (108A, 108B ; 108A', 108B', 108C', 108D' ; 208A, 208B) font saillie à partir de la couche de garniture de palier (106, 106', 206) et s'étendent au moins partiellement circonférentiellement sur l'ensemble de la couche de garniture de palier (106, 106', 206), **caractérisé en ce que** les premier et second joints d'étanchéité (108A, 108B ; 108A', 108B', 108C', 108D' ; 208A, 208B) sont constitués d'un polymère et sont formés directement sur la couche de garniture de palier (106, 106', 206) par pulvérisation, sérigraphie, brossage ou extrusion, dans lequel les premiers et second joints d'étanchéité polymères comprennent chacun une pluralité de sous-joints d'étanchéité, et/ou
la surface d'appui (112') est pourvue d'au moins un autre joint d'étanchéité (108C', 108D') entre les premier et second joints d'étanchéité polymères (108A', 108B').
